# EUROPEAN PATENT SPECIFICATION

(11) **EP 3 100 897 B1**
(45) Date of publication and mention of the grant of the patent: **04.09.2019**
(21) Application number: 15742784.0
(22) Date of filing: 05.01.2015
(51) Int. Cl.: B60L 5/38, B60L 5/40, B60M 7/00

(54) **ELECTRIC VEHICLE**
ELEKTROFAHRZEUG
VÉHICULE ÉLECTRIQUE

(30) Priority: 31.01.2014 JP 2014017508
(43) Date of publication of application: 07.12.2016
(73) Proprietor: Honda Motor Co., Ltd., Tokyo 107-8556 (JP)
(72) Inventor: TAJIMA, Takamitsu, Wako-shi Saitama 351-0193 (JP); NOGUCHI, Wataru, Wako-shi Saitama 351-0193 (JP)
(74) Representative: Beder, Jens
(86) International application number: PCT/JP2015/050033
(87) International publication number: WO 2015/115122

(56) References cited:
- JP-A- H02 273 004
- JP-A- H02 273 004
- JP-A- 2013 233 037
- JP-A- 2013 233 037

## Description

### Technical Field

The present invention relates to an electric vehicle that charges an energy storage device of the electric vehicle by bringing a charging head into contact with power lines through which electrical power is supplied during traveling.

### Background Art

In Japanese Laid-Open Patent Publication No. 2013-233037, which pertains to the preamble part of claim 1, charging of an energy storage device of an electric vehicle is disclosed in which, during traveling of the electric vehicle, power receiving elements (rollers) of a charging head disposed on a distal end of an arm portion of the electric vehicle are brought into contact while undergoing rotation with power lines to which electric power is supplied. The charging arm compensates for small distance variations in the vertical direction when the vehicle swings.

Besides, Japanese Laid-Open Patent Publication No. H02-273004 discloses an electric vehicle configured to charge an energy storage device by bringing power receiving elements of a charging arm into contact with power lines, which are disposed along a travel path of the electric vehicle and to which electrical power is supplied. The charging arm comprises an arm portion that is deployed, during charging, in a vehicle vertical direction and above the electric vehicle. The power receiving elements are disposed in a circular charging head positioned on a distal end of the arm portion. The charging arm compensates for small distance variations in the vertical direction when the vehicle swings.

### Summary of Invention

Provisionally, in the case of a configuration in which a longitudinal direction of the charging head is arranged perpendicularly to the power lines when the arm portion is open, if the distance between the electric vehicle and the power lines becomes shorter, the arm portion is returned toward the side of the electric vehicle in a state in which the charging head is in contact with the power lines. For this reason, as the distance between the electric vehicle and the power lines becomes shorter, the angle defined by the longitudinal direction of the charging head and the power lines gradually becomes smaller. Consequently portions apart from the power receiving elements of the charging head interfere with the power lines, and it becomes impossible for the charging member to remain in contact with the power lines.

The present invention has the object of providing an electric vehicle that enables power receiving elements and power lines to stably remain in contact with each other, even in the case that the angle formed by a charging head and the power lines vary due to a variation in the distance between the electric vehicle and the power lines.

The present invention is characterized by an electric vehicle that charges an energy storage device configured to drive the electric vehicle, by bringing power receiving elements of a charging arm into contact with power lines, which are disposed along a travel path of the electric vehicle together with facing toward a side portion of the electric vehicle, and to which electrical power is supplied, wherein the charging arm comprises an arm portion configured to be deployed, during charging, from the side portion of the electric vehicle toward an outer side in a vehicle transverse direction by rotating the charging arm about a rotary shaft, the power receiving elements are disposed in a charging head configured to be positioned on a distal end of the arm portion, the charging head is set so as to face toward the power lines at an orientation in which a longitudinal direction of the charging head is perpendicular to the power lines in a case where the arm portion is deployed at a predetermined angle of rotation about the rotary shaft as from the state in which the arm portion is accommodated, and the arm portion is deployed up to a first angle of rotation about the rotary shaft as from the state in which the arm portion is accommodated, the first angle of rotation being greater than the predetermined angle of rotation.

According to the present invention, in the electric vehicle, the charging arm includes an actuator configured to slide along a slide rail, and a spring damper comprising one end attached rotatably to the arm portion, and another end attached rotatably to the actuator, and the spring damper biases the arm portion in a direction to deploy the arm portion outwardly in the vehicle transverse direction.

According to the present invention, in the electric vehicle, the actuator is configured to slide along the slide rail when the slide rail is disposed in a longitudinal direction of the electric vehicle.

According to the present invention, in the electric vehicle, the charging head is attached to a distal end of the arm portion through a bracket, to define a predetermined angle between the longitudinal direction of the charging head and a direction in which the arm portion extends.

According to the present invention, since the arm portion is deployed to the first angle of rotation that is greater than the predetermined angle of rotation, even in the case that the distance between the electric vehicle and the power lines is varied by the power receiving elements contacting the power lines and the arm portion being returned to the side of the electric vehicle, the power receiving elements and the power lines can stably be kept in contact with each other.

According to the present invention, since the spring damper biases the arm portion in a direction to deploy the arm portion outwardly in the vehicle transverse direction, when the arm portion is brought into contact with the power lines and returned to the side of the electric vehicle, the power receiving elements are pressed against the power lines by the biasing force of the spring damper. Consequently, the contact pressure between the power receiving elements and the power lines can be maintained, and electrical power from the power lines can be supplied in a stable manner to the energy storage device.

According to the present invention, since the charging head is attached to the distal end of the arm portion through a bracket, in such a manner that the longitudinal direction of the charging head and a direction in which the arm portion extends define a predetermined angle, at a time that the arm portion is deployed to the predetermined angle, the charging head can simply be attached to the distal end of the arm portion so that the longitudinal direction thereof faces toward the power lines at a direction perpendicular with respect to the power lines.

### Brief Description of Drawings

FIG. 1 is a view showing a schematic overall configuration of a contact type charging system when an electric vehicle according to an embodiment of the invention is viewed from an upper side;
FIG. 2 is a view showing a schematic overall configuration of the contact type charging system when an electric vehicle according to an embodiment of the invention is viewed from a front side;
FIG. 3 is a view showing an installation structure for the power lines shown in FIG. 1;
FIG. 4 is a cross-sectional view taken along line IV-IV of FIG. 3;
FIG. 5 is a view showing an example of an electrical power supplying device provided on a travel path;
FIG. 6 is a perspective view of a charging head shown in FIG. 1;
FIG. 7 is a side view of the charging head shown in FIG. 1;
FIG. 8 is a plan view of the charging head shown in FIG. 1;
FIG. 9 is a view showing a state of contact between the charging head and the power lines;
FIG. 10 is a schematic view of a charging arm shown in FIG. 1;
FIG. 11 is a view showing a relationship between an angle of rotation of the charging arm, and a distance to the power lines from a side portion on a driver's seat side of the electric vehicle;
FIG. 12 is a view showing a charging head according to a modification;
FIG. 13 is a view showing a main body portion illustrated in FIG. 12; and
FIG. 14 is a view showing an example in which an accommodating section is disposed on a lower part of the main body portion according to a modification.

### Description of Embodiments

A preferred embodiment of an electric vehicle according to the present embodiment will be described in detail below with reference to the accompanying drawings.

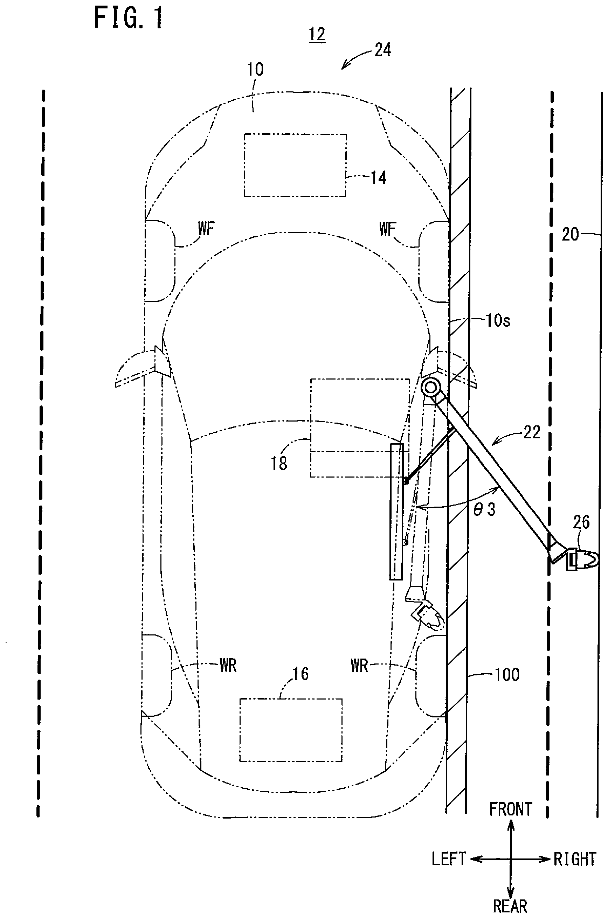

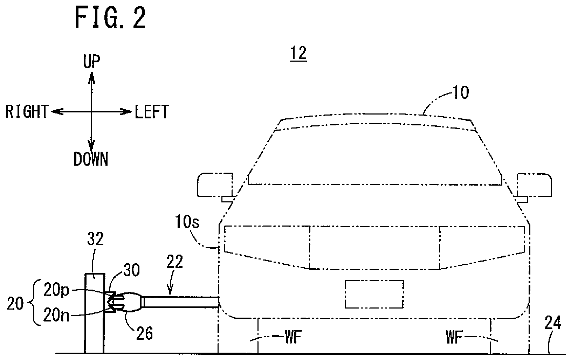

FIG. 1 shows a schematic overall configuration of a contact type charging system 12 when an electric vehicle 10 is viewed from an upper side, and FIG. 2 shows a schematic overall configuration of the contact type charging system 12 when the electric vehicle 10 is viewed from a front side. The electric vehicle 10 is a vehicle in which there are mounted an electric motor 14 serving as a drive source, and a driving energy storage device 16 for supplying electrical power to the electric motor 14, and corresponds, for example, to an electric automobile, a hybrid vehicle equipped with an internal combustion engine, and a fuel cell vehicle equipped with a fuel cell. The front and rear, left and right, and upper and lower directions will be described in accordance with the directions of the arrows shown in FIGS. 1 and 2.

The contact type charging system 12 is constituted at least from power lines 20 made of a conductive material to which electrical power is supplied, and the electric vehicle 10, which is equipped with a charging arm 22 capable of being placed in contact with the power lines 20. The charging arm 22 is provided on a side portion 10s on the side of a driver's seat 18 on the right side of the electric vehicle 10, and is disposed between the front wheels WF and the rear wheels WR. In countries in which roads are for right side traveling, the driver's seat 18 generally is located on the left side of the electric vehicle 10, and therefore, the charging arm 22 is disposed on a side portion on the left side of the electric vehicle 10.

The power lines 20 are arranged along a travel path (road) 24 on which the electric vehicle 10 travels, and are arranged in facing relation to the side portion 10s on the driver's seat 18 side of the electric vehicle 10. The power lines 20 are arranged on the side of a central line of the travel path 24. In the case of roads on which there are plural lanes on one side (for example, in the case of roads on which there are two lanes or three lanes on one side), the power lines 20 are arranged in the vicinity of the central line and are not disposed respectively in each of the lanes. Further, in the case of a road in which there is a central dividing median, the power lines 20 may be arranged on the median.

The power lines 20 may be disposed at the length of a specified section. The length of the specified section, for example, may be set to a length that is capable of charging the electric vehicle 10, so as to be capable of traveling from a position where certain power lines 20 are disposed to the position where next power lines 20 are disposed. While traveling along the power lines 20 on a travel path 24 on which the power lines 20 are arranged, a charging head 26 provided on the distal end of the charging arm 22 of the electric vehicle 10 is extended outwardly in the vehicle transverse direction, and the energy storage device 16 is charged by the charging head 26 coming into contact with the power lines 20.

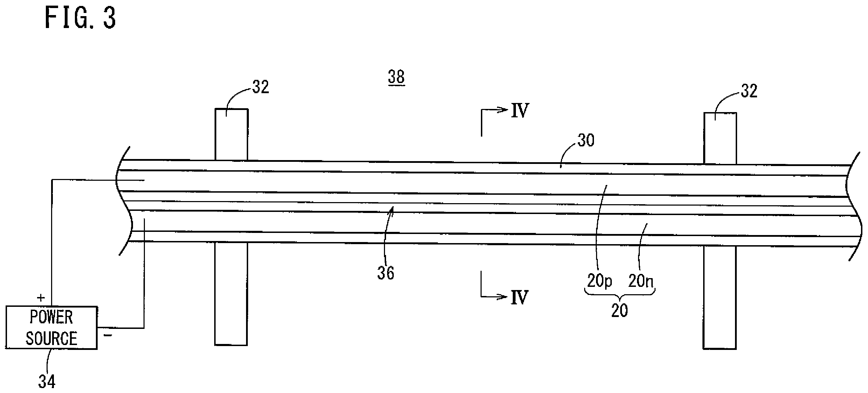

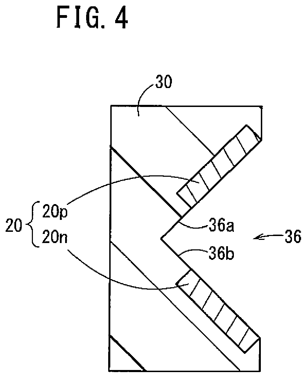

FIG. 3 is a view showing an installation structure for the power lines 20, and FIG. 4 is a cross-sectional view taken along line IV-IV of FIG. 3. The power lines 20 are retained by a power line retaining unit 30 made of an insulating material, and the power line retaining unit 30 is supported from a rear side thereof by guard posts 32 disposed at predetermined intervals along the travel path 24. The guard posts 32 support the power line retaining unit 30 so that the height thereof enables the power lines 20 to come into contact with the distal end of the charging arm 22. The power line retaining unit 30 maintains the power lines 20 along the lengthwise direction of the power lines 20.

A power source 34 supplies electrical power to the power lines 20. The power lines 20 include a positive electrode side power line 20p made of a conductive material, and a negative electrode side power line 20n made of a conductive material and arranged below the positive electrode side power line 20p. A first voltage, which is a high DC voltage, is imposed on the positive electrode side power line 20p from the power source 34, and a second voltage, which is a low DC voltage (reference voltage) of a lower direct current than the first voltage, is imposed on the negative electrode side power line 20n from the power source 34. A front side of the power line retaining unit 30 is shaped in the form of a V-shaped groove 36 so as to open in the vertical direction. The positive electrode side power line 20p is embedded therein so that a front surface thereof is exposed on an upper surface 36a of the V-shaped groove 36, and the negative electrode side power line 20n is embedded therein so that a front surface thereof is exposed on a lower surface 36b of the V-shaped groove 36. The voltage imposed on the power lines 20 (20p, 20n) may also be an AC voltage. The power lines 20, the power line retaining unit 30, and the power source 34 make up an electrical power supplying device 38 that supplies electrical power to the electric vehicle 10.

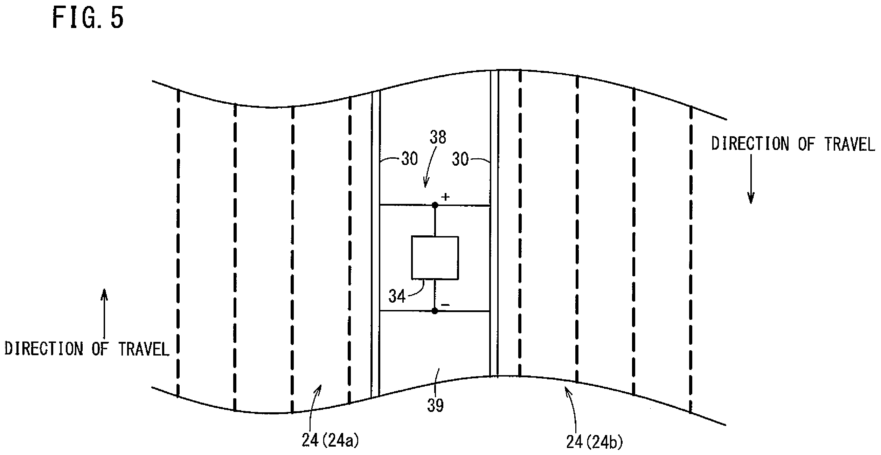

FIG. 5 is a view showing an example of the electrical power supplying device 38 disposed on a travel path 24. In FIG. 5, a one-side three lane travel path 24, or stated otherwise, a six lane road is illustrated, in which a central median 39 serving as a central line is disposed on the road. One of the travel paths 24 is a travel path 24a along which the electric vehicle 10 travels, and the other of the travel paths 24 is a travel path 24b along which an oncoming vehicle travels. The central median 39, which serves as a central line, serves to partition the travel path 24a and the travel path 24b.

As shown in FIG. 5, power line retaining units 30 that retain the power lines 20 are disposed respectively corresponding to the travel paths 24a, 24b. The power line retaining unit 30 that is disposed corresponding to the travel path 24a is disposed on the travel path 24b side of the travel path 24a, whereas the power line retaining unit 30 that is disposed corresponding to the travel path 24b is disposed on the travel path 24a side of the travel path 24b. Further, the power source 34 is disposed between the travel path 24a and the travel path 24b. As shown in FIG. 5, the power source 34 is disposed on the central median 39. Owing thereto, the power source 34 that supplies power to the power lines 20 disposed on the travel paths 24a, 24b can be used in common. Stated otherwise, a single power source 34 supplies electrical power with respect to the power lines 20 of both of the travel paths 24a, 24b. Consequently, complexity of the electrical wiring from the power source 34 to the power lines 20 of the travel paths 24a, 24b can be suppressed.

The power line retaining units 30 that retain the power lines 20 of the travel paths 24a, 24b may also be disposed on the central median 39. In this case, the power line retaining unit 30 corresponding to the travel path 24a is disposed on the side of the travel path 24a, whereas the power line retaining unit 30 corresponding to the travel path 24b is disposed on the side of the travel path 24b.

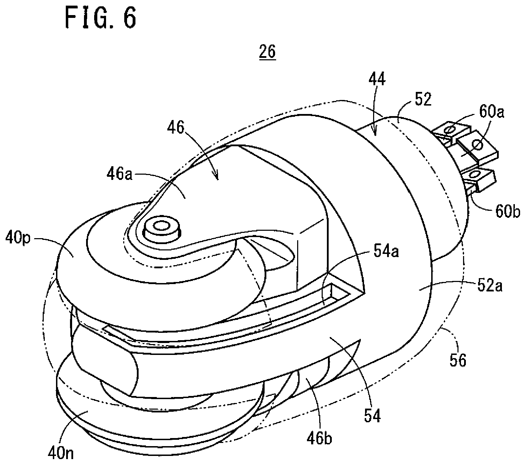

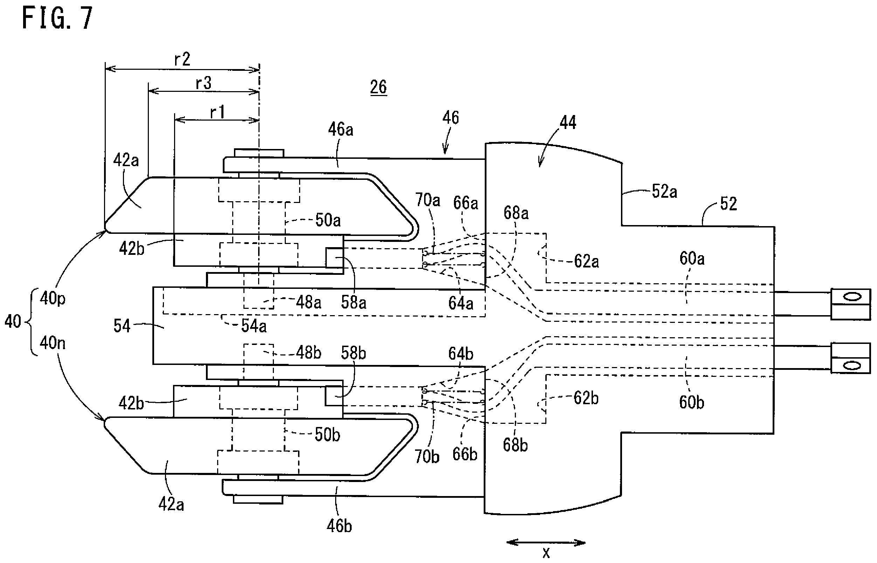

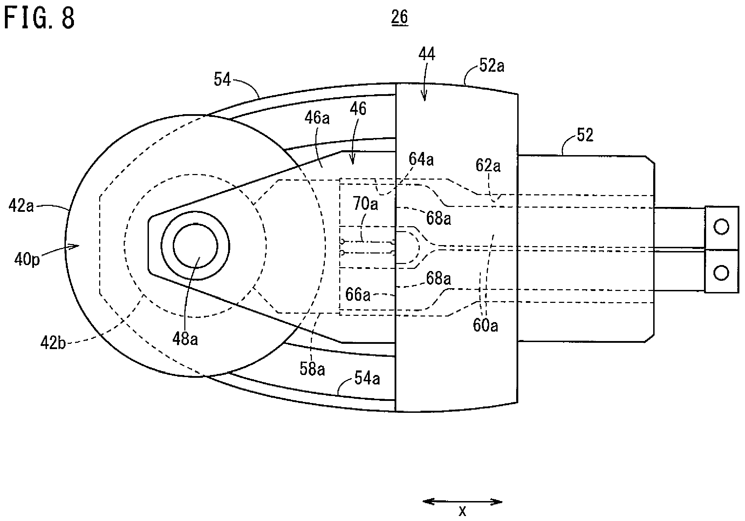

FIG. 6 is a perspective view of the charging head 26, FIG. 7 is a side view of the charging head 26, and FIG. 8 is a plan view of the charging head 26. The charging head 26 comprises a positive electrode side power receiving element 40p in the form of a roller that contacts the positive electrode side power line 20p of the power lines 20, and a negative electrode side power receiving element 40n in the form of a roller that contacts the negative electrode side power line 20n of the power lines 20. The positive electrode side power receiving element 40p and the negative electrode side power receiving element 40n are provided vertically in a pair. Power receiving elements 40 (40p, 40n) are disposed on a distal end side of the charging head 26. The power receiving elements 40p, 40n are formed from a conductive material. As shown in FIG. 7, the power receiving elements 40p, 40n are each of the same structure and shape, and include a first roller member 42a having a substantially frustoconical shape, and a second roller member 42b having a substantially cylindrical shape and disposed on a bottom surface side of the first roller member 42a. The first roller member 42a and the second roller member 42b are formed integrally with centers thereof arranged on the same axis (coaxially).

The cylindrically shaped second roller members 42b have an outer circumferential surface of a first radius r1, and the outer circumferential surface of the first roller members 42a include radii that are larger than the first radius r1. Owing thereto, the first roller members 42a can be placed in contact with respect to the power lines 20, and the circumferential velocity of the outer circumferential surface of the second roller members 42b is smaller in comparison with that of the first roller members 42a. More specifically, the first roller member 42a is substantially in the form of a truncated cone, the bottom surface of which is formed with a circular second radius r2 that is greater than the first radius r1, and the upper surface of which is formed with a circular third radius r3 that is smaller than the second radius r2. Stated otherwise, the outer circumferential surface of the first roller member 42a is formed by the second radius r2 and the third radius r3. The third radius r3 may be either smaller or larger than the first radius r1.

The power receiving elements 40p, 40n are mounted on the charging head 26 by being separated in a vertically symmetrical manner, such that the second roller members 42b face toward one another mutually. It is possible for the positive electrode side power line 20p and the negative electrode side power line 20n provided in the V-shaped groove 36 to be contacted by the first roller members 42a of the positive electrode side power receiving element 40p and the negative electrode side power receiving element 40n. The first roller members 42a may also be formed in a cylindrical columnar shape of the second radius r2. In this case, there is no need for the V-shaped groove 36 to be provided in the power line retaining unit 30.

The power receiving elements 40p, 40n are axially supported rotatably by a rotary support member 46 that is mounted on a main body portion 44 of the charging head 26. The rotary support member 46 includes a first support member 46a that rotatably supports the power receiving element 40p, and a second support member 46b that rotatably supports the power receiving element 40n. More specifically, the first support member 46a includes a support shaft (central shaft) 48a that extends in a vertical direction supporting the power receiving element 40p, and the power receiving element 40p is attached rotatably to the support shaft 48a through a bearing 50a. Similarly, the second support member 46b includes a support shaft (central shaft) 48b that extends in a vertical direction supporting the power receiving element 40n, and the power receiving element 40n is attached rotatably to the support shaft 48b through a bearing 50b. The first support member 46a and the second support member 46b have the same shape, and are attached in a vertically symmetrical manner to the main body portion 44.

The main body portion 44 includes a base section 52 having a disk-shaped flange 52a, and a partition plate 54 disposed contiguously toward the distal end side of the charging head 26 from a side surface of the flange 52a, and which vertically partitions the power receiving element 40p and the power receiving element 40n. The first support member 46a is attached upwardly of the partition plate 54, and the second support member 46b is attached downwardly of the partition plate 54. Distal end parts of the power receiving elements 40p, 40n (distal ends of the first roller members 42a) project out more toward the distal end side than the partition plate 54. Consequently, the distal end parts of the power receiving elements 40p, 40n can be placed in contact with the power lines 20. Further, as shown in FIG. 6, the rearward side of the main body portion 44 and the power receiving elements 40p, 40n are covered by a cover 56.

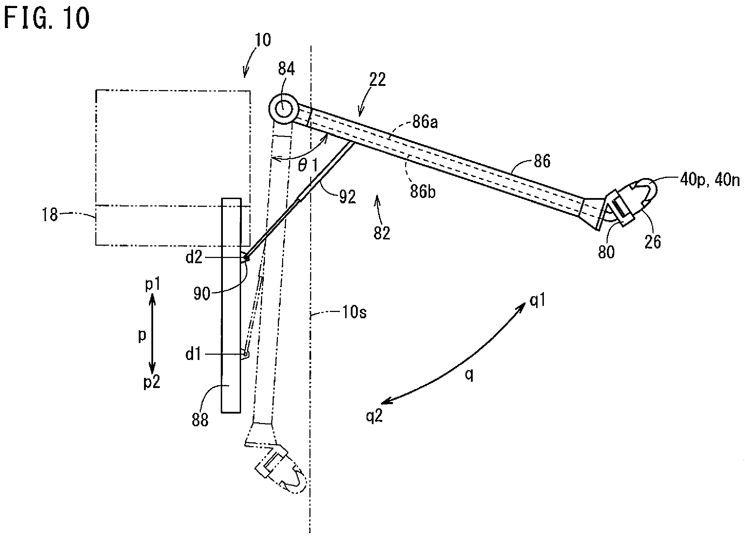

A conductive brush (contact conductor) 58a that contacts the second roller member 42b of the power receiving element 40p is disposed slidably along a longitudinal direction of the charging head 26 (the directions of the arrow x in FIGS. 7 and 8) in the interior of the first support member 46a. A contact surface of the brush 58a in contact with the second roller member 42b includes an arcuate shape in accordance with the shape of the second roller member 42b. In addition, two conductive bus bars 60a, 60a extend through a through hole 62a formed in the interior of the base section 52 and a through hole 64a formed in the interior of the first support member 46a, and are connected electrically to the brush 58a. The two bus bars 60a, 60a are connected to the brush 58a over a predetermined interval in the horizontal direction. Other ends of the bus bars 60a, 60a are fixed in a non-movable state, and are connected electrically to the energy storage device 16 of the electric vehicle 10 through electrical cables 86a disposed in the interior of an arm portion 86 (see FIG. 10) of the charging arm 22. The through hole 62a communicates with the through hole 64a by being branched into two in a horizontal direction in the interior of the flange 52a of the base section 52. An opening 66a of the through hole 64a has a size that covers two openings 68a, 68a of the through hole 62a that is formed in the flange 52a.

Similarly, a conductive brush (contact conductor) 58b that contacts the second roller member 42b of the power receiving element 40n is disposed slidably along a longitudinal direction of the charging head 26 in the interior of the second support member 46b. A contact surface of the brush 58b in contact with the second roller member 42b includes an arcuate shape in accordance with the shape of the second roller member 42b. In addition, two conductive bus bars 60b, 60b extend through a through hole 62b formed in the interior of the base section 52 and a through hole 64b formed in the interior of the second support member 46b, and are connected to the brush 58b. The two bus bars 60b, 60b are connected to the brush 58b over a predetermined interval in the horizontal direction. Other ends of the bus bars 60b, 60b are fixed in a non-movable state, and are connected electrically to the energy storage device 16 of the electric vehicle 10 through electrical cables 86b disposed in the interior of the arm portion 86 (see FIG. 10) of the charging arm 22. The through hole 62b communicates with the through hole 64b by being branched into two in a horizontal direction in the interior of the flange 52a of the base section 52. An opening 66b of the through hole 64b has a size that covers two openings 68b, 68b of the through hole 62b that is formed in the flange 52a.

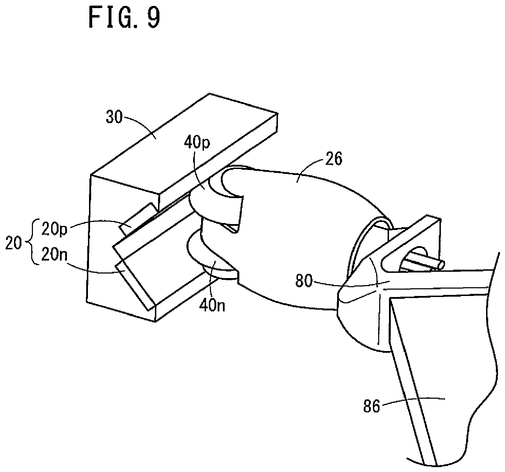

As shown in FIG. 9, while the electric vehicle 10 is traveling, since charging is carried out by the power receiving elements 40p, 40n of the charging head 26 being placed in contact with the power lines 20, the power receiving elements 40p, 40n of the charging head 26 contact the brushes 58a, 58b while undergoing rotation. Consequently, contact friction is generated between the brushes 58a, 58b and the power receiving elements 40p, 40n. For this reason, when the second roller members 42b of the power receiving elements 40p, 40n and/or the brushes 58a, 58b gradually are abraded and subjected to wear over time, a condition of non-contact occurs between the brushes 58a, 58b and the second roller members 42b of the power receiving elements 40p, 40n.

Thus, by spring members (biasing members) 70a, 70b that are disposed inside the through holes 64a, 64b, the brushes 58a, 58b are biased (pressed) in the direction of the arrow x toward the sides of the second roller members 42b (toward the distal end side of the charging head 26). Owing thereto, even if the power receiving elements 40p, 40n and/or the brushes 58a, 58b become abraded, due to the spring members 70a, 70b, the brushes 58a, 58b can be pressed against the second roller members 42b of the power receiving elements 40p, 40n by sliding (or being moved) toward the distal end side. Consequently, the first voltage can be transmitted reliably to the bus bars 60a, 60a from the positive electrode side power line 20p through the positive electrode side power receiving element 40p, and the second voltage can be transmitted reliably to the bus bars 60b, 60b from the negative electrode side power line 20n through the negative electrode side power receiving element 40n.

Further, in the charging head 26, the bus bars 60a, 60a at the interior of the through holes 62a, 64a, and the bus bars 60b, 60b at the interior of the through holes 62b, 64b are retained to a certain degree in a slackened state. Stated otherwise, in comparison with a length of a shortest distance of the bus bars 60a, 60b that interconnects the distal end sides of the electrical cables 86a, 86b and the brushes 58a, 58b, a length of the bus bars 60a, 60b is set to possess a further surplus length, and the surplus length thereof is subjected to slackening in the interior of the through holes 62a, 64a and the through holes 62b, 64b. Owing thereto, the bus bars 60a, 60b can be allowed to follow along with the movement of the brushes 58a, 58b, and thus, the brushes 58a, 58b can be moved toward the side of the power receiving elements 40p, 40n.

One end of the spring member 70a is mounted on the brush 58a between the two bus bars 60a, 60a, and the other end of the spring member 70a is mounted on the flange 52a between the openings 68a, 68a. Similarly, one end of the spring member 70b is mounted on the brush 58b between the two bus bars 60b, 60b, and the other end of the spring member 70b is mounted on the flange 52a between the openings 68b, 68b.

Further, by contact friction between the power lines 20 and the first roller members 42a of the power receiving elements 40p, 40n due to rotation of the power receiving elements 40p, 40n, the first roller members 42a of the power receiving elements 40p, 40n and/or the power lines 20 gradually are abraded and subjected to wear over time. As a result of such abrasion, wear debris (shavings) from the first roller members 42a and/or the power lines 20 are ejected. Further, as discussed previously, by abrasion due to contact friction between the second roller members 42b of the power receiving elements 40p, 40n and the brushes 58a, 58b, wear debris (shavings) from the second roller members 42b and/or the brushes 58a, 58b are ejected.

When such wear debris is scattered about, there is a possibility for adverse effects such as insulation defects or the like in peripheral components to occur. Further, it is contemplated that such wear debris generated by rotation of the power receiving element 40p may fall downwardly and impart an adverse influence on the power receiving element 40n. For example, it is conceivable that an influence will be effected on the contact state between the power lines 20 and the power receiving element 40n, or that the power receiving element 40p cannot be rotated smoothly, or that an arc may be generated.

Thus, a recessed part 54a is provided, which is recessed a predetermined depth in an upper surface of the partition plate (accommodating section) 54 that is disposed between the power receiving elements 40p, 40n. The recessed part 54a is formed around an outer periphery of the partition plate 54. Since wear debris, which is generated by contact friction between the first roller member 42a of the power receiving element 40p and the positive electrode side power line 20p, is accommodated in the recessed part 54a, scattering about of the wear debris that is generated by contact friction between the first roller member 42a of the power receiving element 40p and the positive electrode side power line 20p can be prevented. Accordingly, the occurrence of adverse effects such as insulation defects or the like in peripheral components can be suppressed.

Further, when the charging head 26 is observed from a vertical direction, the recessed part 54a is formed in the partition plate 54 so as to surround the contact position between the power receiving element 40p and the brush 58a. Consequently, since wear debris, which is generated by contact friction between the second roller member 42b of the power receiving element 40p and the brush 58a, is accommodated in the recessed part 54a, scattering about of the wear debris that is generated by contact friction between the second roller member 42b of the power receiving element 40p and the brush 58a can be prevented. Accordingly, the occurrence of adverse effects such as insulation defects or the like in peripheral components can be suppressed.

As shown in FIG. 10, the charging arm 22 includes, apart from the charging head 26, a bracket 80 to which the charging head 26 is attached, and a slider crank mechanism 82 by which the charging head 26 is moved (rotated) through the bracket 80 in the directions of the arrow q (q1, q2).

The slider crank mechanism 82 includes the arm portion 86, which is deployed horizontally in a vehicle transverse and outward direction by rotating about a rotary shaft 84 provided on the electric vehicle 10, a slide rail 88, which is mounted along the longitudinal direction of the vehicle body more on an inner side of the vehicle body of the electric vehicle 10 than the arm portion 86, an actuator 90 that slides on the slide rail 88 in the directions of the arrow p (p1, p2), and a spring damper 92, one end of which is attached rotatably to the arm portion 86, and another end of which is attached rotatably to the actuator 90. The charging head 26 is attached to the distal end side (a side opposite to the rotary shaft 84) of the arm portion 86 through the bracket 80. The spring damper 92 biases the arm portion 86 in a direction to deploy the arm portion 86 outwardly in the vehicle transverse direction.

When the actuator 90 moves on the slide rail 88 in the direction of the arrow p1, the arm portion 86 is rotated about the rotary shaft 84 in the direction of the arrow q1, and the charging head 26 is also moved together therewith in the direction of the arrow q1. As a result, the arm portion 86 opens horizontally about the rotary shaft 84 from a lateral side of the vehicle body of the electric vehicle 10, and the charging head 26 moves to the side of the power lines 20.

On the other hand, when the actuator 90 moves on the slide rail 88 in the direction of the arrow p2, the arm portion 86 is rotated about the rotary shaft 84 in the direction of the arrow q2, and the charging head 26 is also moved together therewith in the direction of the arrow q2. As a result, a closed state of the arm portion 86 is brought about, and the charging head 26 is housed in the electric vehicle 10.

In the present embodiment, the position of the actuator 90 when the charging head 26 is accommodated (the state shown by the two-dot-dashed lines of FIG. 10) is regarded as an initial position d1, and in the case that charging is to be carried out, the actuator 90 is moved from the initial position d1 to a predetermined position d2 along the direction of the arrow p1. Consequently, the arm portion 86 is deployed up to a first angle of rotation θ1, and the charging head 26 projects (outwardly of the electric vehicle 10) toward the side of the power lines 20 (the state shown by the solid lines of FIG. 10). The angle of rotation refers to an angle from the state in which the arm portion 86 is accommodated.

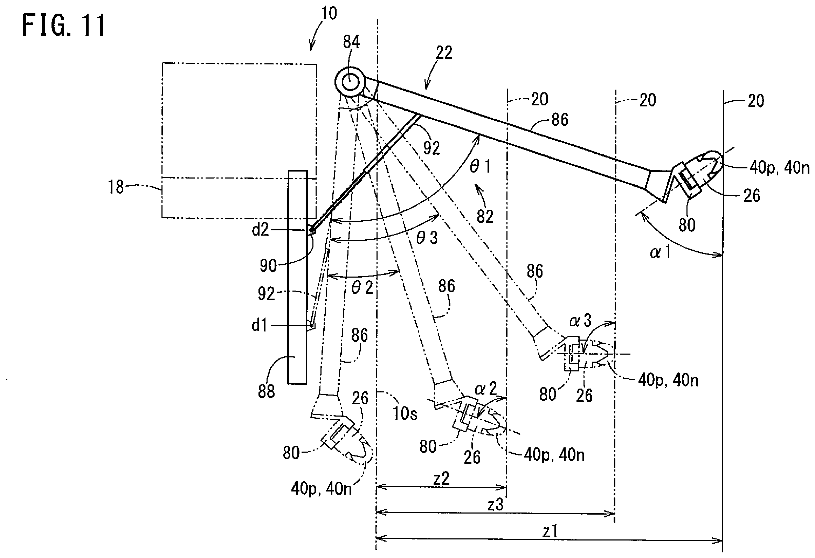

As shown in FIG. 11, when the arm portion 86 is deployed up to the first angle of rotation θ1, the charging head 26 can be placed in contact with the power lines 20, which are separated a first predetermined distance z1 from the side portion 10s on the side of the driver's seat 18 of the electric vehicle 10. Additionally, when the distance to the power lines 20 from the side portion 10s on the side of the driver's seat 18 of the electric vehicle 10 becomes shorter than the first predetermined distance z1, the charging head 26 is pressed by the power lines 20, whereupon the arm portion 86 undergoes rotation in the direction (closing direction) of the arrow q2 in opposition to the biasing force of the spring damper 92. Along therewith, the charging head 26 also is moved in the direction of the arrow q2 (toward the side of the vehicle body).

However, since it is impossible for the spring damper 92 to be contracted beyond a predetermined length, the range within which the charging head 26 can be moved in the direction of the arrow q2 is limited. For the sake of convenience, the angle of rotation of the arm portion 86 at the time that the spring damper 92 is contracted maximally will be referred to as a second angle of rotation θ2. In other words, during power reception, in accordance with the spring damper 92, the arm portion 86 can be rotated within the range of the second angle of rotation θ2 from the first angle of rotation θ1. Consequently, the distance between the power lines 20, which are contacted by the power receiving elements 40p, 40n of the charging head 26 when the arm portion 86 is at the second angle of rotation θ2, and the side portion 10s on the side of the driver's seat 18 of the electric vehicle 10 becomes a second predetermined distance z2 that is shorter than the first predetermined distance z1. Moreover, during charging, the angle of rotation of the arm portion 86 does not become smaller than the second angle of rotation θ2, and therefore, the distance between the power lines 20 and the side portion 10s on the side of the driver's seat 18 of the electric vehicle 10 (also referred to as a "distance between the electric vehicle 10 and the power lines 20) does not become less than the second predetermined distance z2.

Further, when the spring damper 92 has been retracted to a fixed length, by the actuator 90 undergoing movement or the like in the direction of the arrow p2, the angle of rotation can be controlled by controlling or interlocking the retraction of the spring damper 92 and movement of the actuator 90. In this case, the contact pressure between the power lines 20 and the power receiving elements 40p, 40n due to the spring damper 92 can be controlled more finely. Further, even in this case, the rotational range of the arm portion 86 is limited to within a predetermined angular range.

Since charging of the electric vehicle 10 is carried out during traveling, accompanying the time of traveling, due to vibration and swaying of the electric vehicle 10 or the like, the electric vehicle 10 swings to the left and right, and the distance between the electric vehicle 10 and the power lines 20 becomes both longer and shorter. Further, when the distance between the electric vehicle 10 and the power lines 20 becomes smaller than the first predetermined distance z1, a condition occurs in which the power receiving elements 40p, 40n of the charging head 26 are pressed against the power lines 20 by the biasing force of the spring damper 92. Consequently, when charging is carried out during traveling, by setting the distance between the electric vehicle 10 and the power lines 20 in advance to be shorter than the first predetermined distance z1, even if vibration and swaying occurs in the electric vehicle 10, the contact pressure between the power lines 20 and the power receiving elements 40p, 40n of the charging head 26 can be maintained by the spring damper 92, and thus they can be allowed to contact one another in a stable manner.

When charging is carried out, by allowing the electric vehicle 10 to travel in such a manner that the distance between the electric vehicle 10 and the power lines 20 becomes a distance (third predetermined distance z3) exactly in the middle of the first predetermined distance z1 and the second predetermined distance z2, swinging of the electric vehicle 10 to the left and right can be responded to most effectively. The rotational angle of the arm portion 86 when the distance between the electric vehicle 10 and the power lines 20 is at the third predetermined distance z3, for the sake of convenience, will be referred to as a third angle of rotation (predetermined angle of rotation) θ3.

According to the present embodiment, it is assumed that the electric vehicle 10 travels in such a manner that the distance between the electric vehicle 10 and the power lines 20 becomes the third predetermined distance z3. Therefore, as shown in FIG. 1, a guideline 100 for guiding the distance between the electric vehicle 10 and the power lines 20 may be disposed on the travel path 24. In this case, the guideline 100 also constitutes part of the contact type charging system 12.

When the rotational angle of the arm portion 86 is at the third angle of rotation θ3, the charging head 26 is attached to the arm portion 86 through the bracket 80, such that the longitudinal direction of the charging head 26 faces toward the power lines 20 at a direction perpendicular with respect to the power lines 20. Stated otherwise, the charging head 26 is attached to the distal end of the arm portion 86 through the bracket 80, in such a manner that the longitudinal direction of the charging head 26 with respect to the longitudinal direction of the arm portion 86 (direction of extension) is bent toward the side of the opening direction of the arm portion 86. The longitudinal direction of the charging head 26 and the longitudinal direction of the arm portion 86 define a predetermined angle.

When the rotational angle of the arm portion 86 is at the third angle of rotation θ3, an angle α defined by the power lines 20 and the longitudinal direction of the charging head 26 is set to α3 (α3 = 90°). Further, when the rotational angle of the arm portion 86 is at the first angle of rotation θ1, the angle α defined by the power lines 20 and the longitudinal direction of the charging head 26 is set to α1, and when the rotational angle of the arm portion 86 is at the second angle of rotation θ2, the angle α defined by the power lines 20 and the longitudinal direction of the charging head 26 is set to α2. In terms of the angle α in the present embodiment, among the angles defined by the power lines 20 and the longitudinal direction of the charging head 26, a smaller angle is indicated.

If the charging head 26 is disposed so that the longitudinal direction of the charging head 26 is perpendicular with respect to the power lines 20 when the rotational angle of the arm portion 86 is at the first angle of rotation θ1, and the distance between the electric vehicle 10 and the power lines 20 has become the second predetermined distance z2, then the angle α of the charging head 26 with respect to the power lines 20 becomes excessively small compared to the angles α1, α2. Conversely, if the charging head 26 is disposed so that the longitudinal direction of the charging head 26 is perpendicular with respect to the power lines 20 when the rotational angle of the arm portion 86 is at the second angle of rotation θ2, and the distance between the electric vehicle 10 and the power lines 20 has become the first predetermined distance z1, then the angle α of the charging head 26 with respect to the power lines 20 becomes excessively small compared to the angles α1, α2. As a result, by the charging head 26 becoming an excessively acute angle with respect to the power lines 20, a portion (for example, the cover 56) other than the power receiving elements 40p, 40n of the charging head 26 interferes with the power lines 20, and there is a concern that the power receiving elements 40p, 40n cannot come into contact with the power lines 20.

Accordingly, by disposing the charging head 26 so that the longitudinal direction of the charging head 26 faces toward the power lines 20 (i.e., so that the charging head 26 and the power lines 20 are disposed face to face) when the rotational angle of the arm portion 86 is at the third angle of rotation θ3, even if the distance between the electric vehicle 10 and the power lines 20 varies within a range from the first predetermined distance z1 to the second predetermined distance z2, the power receiving elements 40p, 40n of the charging head 26 can stably be placed in contact with the power lines 20.

In the foregoing manner, according to the present embodiment, when the arm portion 86 is deployed so as to be placed at the third angle of rotation θ3, the charging head 26 is set so that the longitudinal direction thereof faces toward the power lines 20 perpendicularly with respect to the power lines 20 (i.e., so that the charging head 26 and the power lines 20 are disposed face to face), and the arm portion 86 is deployed up to the first angle of rotation θ1 which is greater than the third angle of rotation θ3. Consequently, it is possible for the power receiving elements 40p, 40n and the power lines 20 to stably be placed in contact with each other, even if the angle α formed by the charging head 26 and the power lines 20 varies due to the variation of the distance between the electric vehicle 10 and the power lines 20.

The charging arm 22 includes the actuator 90 that slides along the slide rail 88, and the spring damper 92, one end of which is attached rotatably to the arm portion 86, and another end of which is attached rotatably to the actuator 90, and the spring damper 92 biases the arm portion 86 in a direction to deploy the arm portion 86 outwardly in the vehicle transverse direction. Accordingly, when the power receiving elements 40p, 40n contact the power lines 20 and the arm portion 86 is returned to the side of the electric vehicle 10, the power receiving elements 40p, 40n are pressed against the power lines 20 by the biasing force of the spring damper 92. Consequently, the contact pressure between the power receiving elements 40p, 40n and the power lines 20 can be maintained, and electrical power from the power lines 20 can be supplied in a stable manner to the energy storage device 16.

The charging head 26 is attached to the distal end of the arm portion 86 through a bracket 80, in such a manner that the longitudinal direction of the charging head 26 and a direction in which the arm portion 86 extends define a predetermined angle. Accordingly, when the arm portion 86 is deployed to the third angle of rotation θ3, the charging head 26 can easily be attached to the distal end of the arm portion 86, so that the longitudinal direction of the charging head 26 faces toward the power lines 20 at a direction perpendicular with respect to the power lines 20.

Further, the power lines 20 come into contact with the first roller members 42a of the power receiving elements 40p, 40n, and the brushes 58a, 58b are placed in contact with the second roller members 42b of the power receiving elements 40p, 40n. More specifically, the positions at which the power receiving elements 40p, 40n contact the power lines 20 are shifted in the axial direction of the support shafts 48a, 48b from the positions at which the power receiving elements 40p, 40n contact the brushes 58a, 58b. Owing thereto, abrasion of the power receiving elements 40p, 40n at the contact position between the power receiving elements 40p, 40n and the power lines 20 can be suppressed. Consequently, the power receiving elements 40p, 40n and the power lines 20 can stably be kept in contact, and electrical power from the power lines 20 can be supplied in a stable manner to the energy storage device 16.

The charging head 26 is equipped with the spring members 70a, 70b that press the brushes 58a, 58b toward the side of the power receiving elements 40p, 40n. Owing to this feature, even in the case that the power receiving elements 40p, 40n or the brushes 58a, 58b are abraded and subjected to wear due to contact between the power receiving elements 40p, 40n and the brushes 58a, 58b, the contact state between the power receiving elements 40p, 40n and the brushes 58a, 58b can be maintained by the spring members 70a, 70b.

In the charging head 26, the bus bars 60a, 60b that connect the brushes 58a, 58b and the electrical cables 86a, 86b are retained in a slackened state. Owing thereto, the bus bars 60a, 60b can be allowed to follow along with the movement of the brushes 58a, 58b, and thus, the brushes 58a, 58b can be moved toward the side of the power receiving elements 40p, 40n. Consequently, the contact state between the brushes 58a, 58b and the power receiving elements 40p, 40n can be maintained.

The power receiving elements 40p, 40n are equipped with the first roller members 42a that contact the power lines 20, and the second roller members 42b having the outer circumferential surface of a first radius r1 and which contact the brushes 58a, 58b, and further, the outer circumferential surface of the first roller members 42a include radii that are larger than the first radius r1. Owing thereto, the first roller members 42a can be placed in contact with respect to the power lines 20. Further, the circumferential velocity of the outer circumferential surface of the second roller members 42b is smaller in comparison with that of the first roller members 42a, whereby frictional wear and abrasion between the second roller members 42b and the brushes 58a, 58b can be suppressed.

Further, because the charging arm 22 extends outwardly in the vehicle transverse direction from the side portion 10s on the driver's seat 18 side of the electric vehicle 10, the driver can easily grasp and comprehend the distance between the electric vehicle 10 and the power lines 20, and by steering a non-illustrated steering handle, the contact state between the power lines 20 and the power receiving elements 40p, 40n of the charging arm 22 can suitably be maintained.

In the event that a two-wheeled vehicle such as a motorcycle is traveling adjacent to the central line or the central median 39, ordinarily, a four-wheeled vehicle does not overtake from the side of the central line or the central median 39. Accordingly, since the charging arm 22 is disposed on the side of the central line or the side of the central median 39 of the electric vehicle 10, safety of the two-wheeled vehicle can be assured.

Since the guideline 100 that guides the distance between the electric vehicle 10 and the power lines 20 is provided on the travel path 24, the distance between the electric vehicle 10 and the power lines 20 can be maintained at an appropriate distance. Consequently, the contact state between the power lines 20 and the power receiving elements 40p, 40n of the charging arm 22 can suitably be maintained.

Since the power source 34 that supplies electrical power to the power lines 20 is disposed between the travel path 24a on which the electric vehicle 10 travels and the travel path 24b on which oncoming vehicles travel, the power source 34 can be used in common with the travel path 24a and the travel path 24b. Consequently, complexity of the electrical wiring from the power source 34 to the power lines 20 of the travel paths 24a, 24b can be suppressed.

Further, since the recessed part 54a, which is recessed at a predetermined depth, is formed on the upper surface of the partition plate 54 of the charging head 26, even in the case that the power receiving element 40p or the power line 20p is subjected to frictional wear due to contact between the power receiving element 40p and the power line 20p, wear debris therefrom can be accommodated in the recessed part 54a. As a result, the occurrence of adverse effects such as insulation defects or the like in peripheral components by scattering about of such wear debris from the power receiving element 40p or the power line 20p can be suppressed.

When observed from a vertical direction, the recessed part 54a is formed in the partition plate 54 so as to surround the contact position between the power receiving element 40p and the brush 58a. Owing thereto, even if wear debris is generated by frictional wearing between the power receiving element 40p and the brush 58a, the wear debris can be accommodated in the partition plate 54. As a result, generation of adverse effects such as insulation defects or the like in peripheral components by wear debris due to contact between the power receiving element 40p and the brush 58a can be suppressed.

The charging head 26 is equipped with the two positive electrode and negative electrode power receiving elements 40p, 40n in a pair, which are separated mutually in the vertical direction, and the partition plate 54 is arranged between the pair of power receiving elements 40p, 40n in the vertical direction. Owing thereto, for example, falling down of wear debris, which is generated by the power receiving element 40p that is arranged on the upper side, to the side of the power receiving element 40n on the lower side, and imparting of an adverse effect on the contact state between the power receiving element 40n and the power line 20n can be suppressed. Consequently, electrical power from the power lines 20 can be supplied in a stable manner to the energy storage device 16 through the pair of power receiving elements 40p, 40n.

### [Modifications]

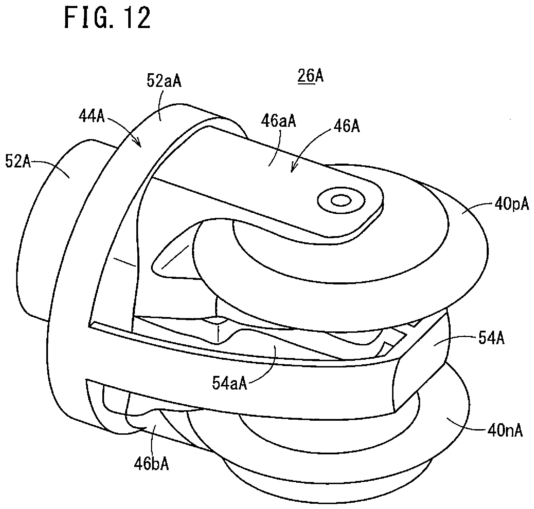

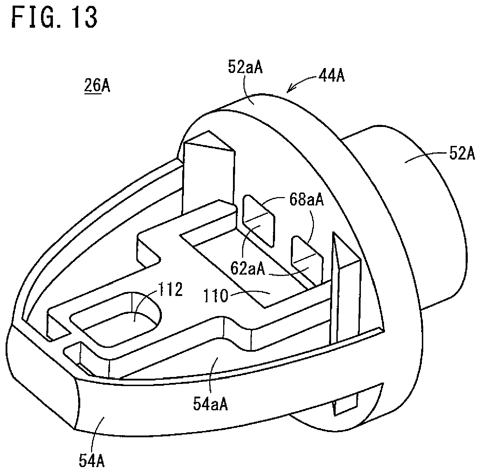

The charging head 26 according to the aforementioned embodiment may be modified as described below. FIG. 12 is a view showing a charging head 26A according to the present modification, and FIG. 13 is a view showing a main body portion 44A illustrated in FIG. 12. In the description of the present modification, the capital letter A is appended to the reference numerals concerning constituent elements having the same functions as those of FIG. 1, and only necessary locations thereof will be described. As noted above, a through hole 62aA provided in a base section 52A of the main body portion 44A branches into two in the interior of a flange 52aA, and communicates with two openings 68aA, 68aA that are formed in the flange 52aA. Differently from the above-described embodiment, the through holes 62aA are formed horizontally in the interior of the base section 52A, and the cross-sectional areas thereof are of the same size. The recessed part 110 is formed in an upper surface of a partition plate 54A on the side of the openings 68aA, 68aA. The recessed part 110 is formed so that two bus bars 60aA, 60aA, which extend from the two openings 68aA, 68aA horizontally through the through holes 62aA, will not interfere with the partition plate 54A. Using the space that is formed by the recessed part 110, the two bus bars 60aA, 60aA extend from the openings 68aA, 68aA in an upwardly bending manner, and are connected to a brush 58aA through the inside of a first support member 46aA (not shown). According to the present modification, the two bus bars 60aA, 60aA are retained in a slackened state in the interior of a through hole 64aA of the first support member 46aA (not shown). Another recessed part 54aA, which is recessed at a predetermined depth around an outer periphery thereof, is formed on the upper surface of the partition plate (accommodating section) 54A. Wear debris, which is generated by contact friction between a positive electrode side power line 20pA and a power receiving element 40pA, and wear debris, which is generated by contact friction between the power receiving element 40pA and the brush 58aA is accommodated by the recessed part 54aA.

The communicating state of non-illustrated bus bars 60bA, 60bA is the same as that of the bus bars 60aA, 60aA. More specifically, differently from the above-described embodiment, through holes 62bA are formed horizontally in the interior of the base section 52A, and the cross-sectional areas thereof are of the same size. In addition, a recessed part 110 is formed in a lower surface of the partition plate 54A on the side of openings 68bA, 68bA. The recessed part 110 is formed so that the two bus bars 60bA, 60bA, which extend from the two openings 68bA, 68bA horizontally through the through holes 62bA, will not interfere with the partition plate 54A. The two bus bars 60bA, 60bA extend from the openings 68bA, 68bA in an downwardly bending manner, and are connected to a brush 58bA through the inside of a second support member 46bA (not shown). According to the present modification, the two bus bars 60bA, 60bA are retained in a slackened state in the interior of a through hole 64bA of the second support member 46bA (not shown).

A recess 112 formed in the upper surface of the partition plate 54A is formed for the purpose of receiving a support shaft 48aA therein, and similarly, in the lower surface of the partition plate 54A, a recess (not shown) is formed for the purpose of receiving a support shaft 48bA therein.

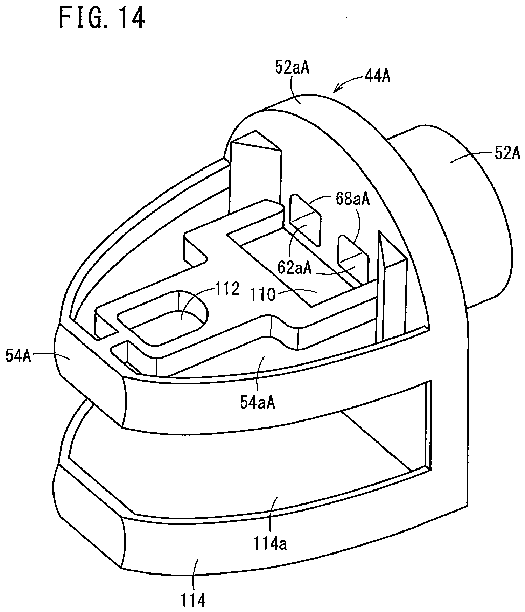

As shown in FIG. 14, an accommodating section 114 in which a recessed part 114a is formed on a lower portion of the charging head 26A (main body portion 44A) may be provided for accommodating wear debris, which is generated by contact friction between a negative electrode side power line 20nA and a power receiving element 40nA, and wear debris, which is generated by contact friction between the power receiving element 40nA and the brush 58bA. The recessed part 114a is formed on the upper surface of the accommodating section 114.

## Claims

1. An electric vehicle (10) comprising a charging arm (22) that is configured to charge an energy storage device (16) configured to drive the electric vehicle (10), by bringing power receiving elements (40p, 40n, 40pA, 40nA) of a charging arm (22) into contact with power lines (20), which are disposed along a travel path (24) of the electric vehicle (10) together with facing toward a side portion (10s) of the electric vehicle (10), and to which electrical power is supplied, wherein:
the charging arm (22) comprises an arm portion (86) configured to be deployed, during charging, from the side portion (10s) of the electric vehicle (10) toward an outer side in a vehicle transverse direction by rotating the charging arm (22) about a rotary shaft (84);
the power receiving elements (40p, 40n, 40pA, 40nA) are disposed in a charging head (26, 26A) configured to be positioned on a distal end of the arm portion (86);
**characterized in that** the charging head (26, 26A) is set so as to face toward the power lines (20) at an orientation in which a longitudinal direction of the charging head (26, 26A) is perpendicular to the power lines (20) in a case where the arm portion (86) is deployed at a predetermined angle of rotation (θ3) about the rotary shaft (84) as from the state in which the arm portion (86) is accommodated; and
the arm portion (86) is deployed up to a first angle of rotation (θ1) about the rotary shaft (84) as from the state in which the arm portion (86) is accommodated, the first angle of rotation (θ1) being greater than the predetermined angle of rotation (θ3).

2. The electric vehicle (10) according to claim 1, wherein:
the charging arm (22) includes an actuator (90) configured to slide along a slide rail (88), and a spring damper (92) comprising one end attached rotatably to the arm portion (86), and another end attached rotatably to the actuator (90); and
the spring damper (92) biases the arm portion (86) in a direction to deploy the arm portion (86) outwardly in the vehicle transverse direction.

3. The electric vehicle (10) according to claim 2, wherein the actuator (90) is configured to slide along the slide rail (88) when the slide rail (88) is disposed in a longitudinal direction of the electric vehicle (10).

4. The electric vehicle (10) according to claim 1, wherein the charging head (26, 26A) is attached to a distal end of the arm portion (86) through a bracket (80), to define a predetermined angle between the longitudinal direction of the charging head (26, 26A) and a direction in which the arm portion (86) extends.

5. The electric vehicle (10) according to any one of claims 2 and 3, wherein, during charging, the power lines (20) are separated by a third predetermined distance (z3) from the side portion (10s) of the electric vehicle (10) that is in the middle of a first predetermined distance (z1) and a second predetermined distance (z2) that are defined such that:
- the power lines (20) are separated by the first predetermined distance (z1) from the side portion (10s) of the electric vehicle (10) when the arm portion (86) is deployed up to the first angle of rotation (θ1) and the charging head (26) is placed in contact with the power lines (20), and that
- the power lines (20) are separated by the second predetermined distance (z2) from the side portion (10s) of the electric vehicle (10) when the spring damper (92) is contracted maximally so that the arm portion (86) is deployed up to a second angle of rotation (θ2), the second predetermined distance (z2) being shorter than the first predetermined distance (z1).

## Patentansprüche

1. Elektrofahrzeug (10) mit einem Ladearm (22), der konfiguriert ist, um eine Energiespeichervorrichtung (16) zu laden, die konfiguriert ist, um das Elektrofahrzeug (10) anzutreiben, indem es Energieempfangselemente (40p, 40n, 40pA, 40nA) eines Ladearms (22) mit Stromleitungen (20) in Kontakt bringt, die entlang eines Fahrwegs (24) des Elektrofahrzeugs (10) zusammen mit dem Blick auf einen Seitenabschnitt (10s) des Elektrofahrzeugs (10) angeordnet sind und denen elektrische Energie zugeführt wird, wobei:
der Ladearm (22) einen Armabschnitt (86) umfasst, der konfiguriert ist, um während des Ladevorgangs vom Seitenabschnitt (10s) des Elektrofahrzeugs (10) zu einer Außenseite in einer Fahrzeugquerrichtung durch Drehen des Ladearms (22) um eine Drehachse (84) ausgefahren zu werden;
die Energieempfangselemente (40p, 40n, 40n, 40pA, 40nA) in einem Ladekopf (26, 26A) angeordnet sind, der konfiguriert ist, um an einem entfernten Ende des Armabschnitts (86) positioniert zu werden;
**dadurch gekennzeichnet, dass** der Ladekopf (26, 26A) so eingestellt ist, dass er den Stromleitungen (20) in einer Ausrichtung zugewandt ist, in der eine Längsrichtung des Ladekopfes (26, 26A) senkrecht zu den Stromleitungen (20) verläuft, in einem Fall, in dem der Armabschnitt (86) in einem vorbestimmten Drehwinkel (θ3) um die Drehachse (84) herum ab dem Zustand, in dem der Armabschnitt (86) aufgenommen ist, eingesetzt wird; und
der Armabschnitt (86) bis zu einem ersten Drehwinkel (θ1) um die Drehachse (84) ab dem Zustand, in dem der Armabschnitt (86) aufgenommen ist, ausgefahren wird,
wobei der erste Drehwinkel (θ1) größer als der vorbestimmte Drehwinkel (θ3) ist.

2. Elektrofahrzeug (10) nach Anspruch 1, wobei:
der Ladearm (22) ein Stellglied (90) aufweist, das konfiguriert ist, um entlang einer Gleitschiene (88) zu gleiten, und einen Federdämpfer (92), der ein Ende aufweist, das drehbar an dem Armabschnitt (86) befestigt ist, und ein anderes Ende, das drehbar an dem Stellglied (90) befestigt ist; und
der Federdämpfer (92) den Armabschnitt (86) in einer Richtung vorspannt, um den Armabschnitt (86) in der Fahrzeugquerrichtung nach außen zu entfalten.

3. Elektrofahrzeug (10) nach Anspruch 2, wobei das Stellglied (90) konfiguriert ist, um entlang der Gleitschiene (88) zu gleiten, wenn die Gleitschiene (88) in einer Längsrichtung des Elektrofahrzeugs (10) angeordnet ist.

4. Elektrofahrzeug (10) nach Anspruch 1, wobei der Ladekopf (26, 26A) an einem entfernten Ende des Armabschnitts (86) durch eine Halterung (80) befestigt ist, um einen vorbestimmten Winkel zwischen der Längsrichtung des Ladekopfes (26, 26A) und einer Richtung zu definieren, in der sich der Armabschnitt (86) erstreckt.

5. Elektrofahrzeug (10) nach einem der Ansprüche 2 und 3, wobei während des Ladevorgangs die Stromleitungen (20) durch einen dritten vorbestimmten Abstand (z3) vom Seitenabschnitt (10s) des Elektrofahrzeugs (10) getrennt sind, der sich in der Mitte eines ersten vorbestimmten Abstandes (z1) und eines zweiten vorbestimmten Abstandes (z2) befindet, die so definiert sind:
- die Stromleitungen (20) durch den ersten vorbestimmten Abstand (z1) vom Seitenabschnitt (10s) des Elektrofahrzeugs (10) getrennt sind, wenn der Armabschnitt (86) bis zum ersten Drehwinkel (θ1) ausgefahren wird und der Ladekopf (26) in Kontakt mit den Stromleitungen (20) gebracht wird, und dass
- die Stromleitungen (20) durch den zweiten vorbestimmten Abstand (z2) vom Seitenabschnitt (10s) des Elektrofahrzeugs (10) getrennt sind, wenn der Federdämpfer (92) maximal zusammengezogen ist, so dass der Armabschnitt (86) bis zu einem zweiten Drehwinkel (θ2) ausgefahren wird, wobei der zweite vorbestimmte Abstand (z2) kürzer als der erste vorbestimmte Abstand (z1) ist.

## Revendications

1. Véhicule électrique (10) comprenant un bras de charge (22) qui est configuré pour charger un dispositif d'emmagasinage d'énergie (16) configuré pour entraîner le véhicule électrique (10), en amenant des éléments récepteurs d'alimentation (40p, 40n, 40pA, 40nA) d'un bras de charge (22) en contact avec des lignes d'alimentation (20), qui sont disposées le long d'un chemin de parcours (24) du véhicule électrique (10) tout en étant en regard d'une portion latérale (10s) du véhicule électrique (10), et auxquelles une alimentation électrique est fournie, dans lequel:
le bras de charge (22) comprend une portion de bras (86) configurée pour être déployée, pendant une charge, depuis la portion latérale (10s) du véhicule électrique (10) vers un côté externe dans une direction transversale du véhicule en faisant tourner le bras de charge (22) autour d'un arbre rotatif (84) ;
les éléments récepteurs d'alimentation (40p, 40n, 40pA, 40nA) sont disposés dans une tête de charge (26, 26A) configurée pour être positionnée sur une extrémité distale de la portion de bras (86) ;
**caractérisé en ce que** la tête de charge (26, 26A) est installée de manière à être en regard des lignes d'alimentation (20) selon une orientation dans laquelle une direction longitudinale de la tête de charge (26, 26A) est perpendiculaire aux lignes d'alimentation (20) dans un cas où la portion de bras (86) est déployée selon un angle de rotation prédéterminé (θ3) autour de l'arbre rotatif (84) depuis l'état dans lequel la portion de bras (86) est accueillie ; et
la portion de bras (86) est déployée jusqu'à un premier angle de rotation (θ1) autour de l'arbre rotatif (84) depuis l'état dans lequel la portion de bras (86) est accueillie, le premier angle de rotation (θ1) étant plus grand que l'angle de rotation prédéterminé (θ3).

2. Véhicule électrique (10) selon la revendication 1, dans lequel :
le bras de charge (22) comprend un actionneur (90) configuré pour coulisser le long d'un rail de coulissement (88), et un amortisseur à ressort (92) comprenant une extrémité fixée en rotation à la portion de bras (86), et une autre extrémité fixée en rotation à l'actionneur (90) ; et
l'amortisseur à ressort (92) sollicite la portion de bras (86) dans une direction pour déployer la portion de bras (86) vers l'extérieur dans la direction transversale du véhicule.

3. Véhicule électrique (10) selon la revendication 2, dans lequel l'actionneur (90) est configuré pour coulisser le long du rail de coulissement (88) lorsque le rail de coulissement (88) est disposé dans une direction longitudinale du véhicule électrique (10).

4. Véhicule électrique (10) selon la revendication 1, dans lequel la tête de charge (26, 26A) est fixée à une extrémité distale de la portion de bras (86) par le biais d'une console (80), pour définir un angle prédéterminé entre la direction longitudinale de la tête de charge (26, 26A) et une direction dans laquelle s'étend la portion de bras (86).

5. Véhicule électrique (10) selon l'une quelconque des revendications 2 et 3, dans lequel, pendant une charge, les lignes d'alimentation (20) sont séparées d'une troisième distance prédéterminée (z3) depuis la portion latérale (10s) du véhicule électrique (10) qui est au milieu d'une première distance prédéterminée (z1) et d'une deuxième distance prédéterminée (z2) qui sont définies de sorte que :
- les lignes d'alimentation (20) soient séparées de la première distance prédéterminée (z1) depuis la portion latérale (10s) du véhicule électrique (10) lorsque la portion de bras (86) est déployée jusqu'au premier angle de rotation (θ1) et la tête de charge (26) est placée en contact avec les lignes d'alimentation (20), et que
- les lignes d'alimentation (20) soient séparées de la deuxième distance prédéterminée (z2) depuis la portion latérale (10s) du véhicule électrique (10) lorsque l'amortisseur à ressort (92) est contracté au maximum si bien que la portion de bras (86) est déployée jusqu'à un deuxième angle de rotation (θ2), la deuxième distance prédéterminée (z2) étant plus courte que la première distance prédéterminée (z1).
